# EUROPEAN PATENT APPLICATION

(11) **EP 4 418 415 A1**
(43) Date of publication of application: **21.08.2024**
(21) Application number: 22945359.2
(22) Date of filing: 10.06.2022
(51) Int. Cl.: H01M 50/133, H01M 50/107

(54) **CYLINDRICAL BATTERY CELL, BATTERY AND ELECTRIC DEVICE**

(71) Applicant: Contemporary Amperex Technology Co., Limited, Ningde, Fujian 352100 (CN)
(72) Inventor: CHENG, Xing, Ningde, Fujian 352100 (CN); CHEN, Wei, Ningde, Fujian 352100 (CN); WU, Yongbin, Ningde, Fujian 352100 (CN); NIU, Shaojun, Ningde, Fujian 352100 (CN)
(74) Representative: Laufhütte, Dieter
(86) International application number: PCT/CN2022/098262
(87) International publication number: WO 2023/236218

(57) **Abstract**

The present application relates to a cylindrical cell, a battery, and a power consuming device, and belongs to the field of battery manufacturing technology. The present application provides a cylindrical cell, comprising: a housing, the housing having an opening at an end in a first direction; and an end cap, covering the opening; wherein the housing comprises a side wall, the side wall comprises a first wall portion and a second wall portion disposed in the first direction, the second wall portion is located on a side of the first wall portion close to the opening, the second wall portion has a thickness greater than the thickness of the first wall portion, and the second wall portion is welded to the end cap. The housing and the end cap of the cylindrical cell are welded with good quality, thereby ensuring enhanced safety performance. The present application further provides a battery and a power consuming device, which comprises the cylindrical cell.

## Description

### Technical Field

The present application relates to the field of battery manufacturing technology, and in particular to a cylindrical cell, a battery, and a power consuming device.

### Background Art

With the continued prosperity of the new energy vehicle market, the industry of traction batteries is rapidly expanding and growing, the lithium battery technology is advancing, and increasingly higher demands are being placed on the safety performance of battery cells.

At present, for cylindrical cells, there are issues with the welding quality of the cell housings and end caps, which not only results in a poor assembly qualification rate, but also poses certain safety risks for the assembled cylindrical cells.

### Summary of the Invention

To this end, the present application provides a cylindrical cell, a battery, and a power consuming device. A housing and an end cap of the cylindrical cell are welded with good quality, thereby ensuring enhanced safety performance.

In a first aspect, an embodiment of the present application provides a cylindrical cell, including: a housing, the housing having an opening at an end in a first direction; and an end cap, covering the opening; wherein the housing comprises a side wall, the side wall comprises a first wall portion and a second wall portion disposed in the first direction, the second wall portion is located on a side of the first wall portion close to the opening, the second wall portion has a thickness greater than the thickness of the first wall portion, and the second wall portion is welded to the end cap.

In the cylindrical cell according to the embodiment of the present application, when the second wall portion is welded to the end cap, since the thickness of the second wall portion is greater than the thickness of the first wall portion, a surface of the second wall portion facing toward the end cap has a larger area facing the end cap, and the housing has a sufficient area to be welded to the end cap, thereby improving the quality of welding between the housing and the end cap, and improving the assembly qualification rate and safety performance of the cylindrical cell.

According to some embodiments of the present application, the second wall portion has a first surface, the first surface is welded to the end cap, and the first surface is an end face of the housing in the first direction.

In the above solution, the area of the first surface directly facing the end cap is large, so that there is a sufficient area to be welded to the end cap, which improves the quality of welding between the housing and the end cap.

According to some embodiments of the present application, the end cap includes a body portion and an edge portion, the edge portion is disposed around the body portion, the edge portion has a thickness less than the thickness of the body portion, the edge portion is welded to the first surface, and a projection of an outer edge of the edge portion falls onto the first surface in the first direction.

In the above solution, the projection of the outer edge of the edge portion falls onto the first surface in the first direction, that is, a surface of the edge portion facing toward the first surface is disposed at least partially directly facing the first surface, so that a reliable welding between the first surface and the edge portion is realized, and the quality of welding between the housing and the end cap is improved.

According to some embodiments of the present application, the second wall portion protrudes from an inner surface of the first wall portion.

In the above solution, the second wall portion protrudes from the inner surface of the first wall portion, which can not only increase the thickness of the second wall portion, but also reduce the extent to which the second wall portion protrudes from an outer surface of the first wall portion with the same thickness, reduce the extent to which the outer volume of the cylindrical cell increases due to an increase in the thickness of the second wall portion, thereby increasing the energy density of the cylindrical cell.

According to some embodiments of the present application, an outer surface of the first wall portion is flush with an outer surface of the second wall portion.

In the above solution, since the outer surface of the first wall portion is flush with the outer surface of the second wall portion, the thickness of the second wall portion is greater than the thickness of the first wall portion while the increase of the outer volume of the cylindrical cell is avoided, thereby increasing the energy density of the cylindrical cell.

According to some embodiments of the present application, the second wall portion protrudes from the outer surface of the first wall portion.

In the above solution, the second wall portion protrudes from the outer surface of the first wall portion, which can not only increase the thickness of the second wall portion, but also reduce the extent to which the second wall portion protrudes from an inner surface of the first wall portion with the same thickness, and reduce the extent to which the opening of the cylindrical cell is narrowed due to an increase in the thickness of the second wall portion, making it easy for the electrode assembly to be placed into the interior of the housing, and facilitating the assembling process of the cylindrical cell.

According to some embodiments of the present application, an inner surface of the first wall portion is flush with an inner surface of the second wall portion.

In the above solution, since the inner surface of the first wall portion is flush with the inner surface of the second wall portion, the thickness of the second wall portion is greater than the thickness of the first wall portion while the original outer volume of the opening of the cylindrical cell is maintained, making it easy for the electrode assembly to be placed into the interior of the housing and facilitating the assembling process of the cylindrical cell.

According to some embodiments of the present application, the second wall portion includes a base portion and a transitional portion, the transitional portion is connected between the base portion and the first wall portion, and the transitional portion has a thickness gradually decreases in a direction facing away from the base portion.

In the above solution, the thickness of the transitional portion gradually decreases in a direction from the base portion toward the first wall portion to realize a smooth and gradual transition of the thickness of the housing from the base portion to the first wall portion, so that the outer surface and/or inner surface of the housing extend in a round and smooth manner and the possibility of the housing scratching the electrode assembly or causing harm to workers is reduced, and further, a reduction of the structural strength at a joint between the base portion and the first wall portion due to a sudden decrease of the thickness can be avoided, thereby making the structural strength of the housing substantially uniform and improving safety performance of the cylindrical cell.

According to some embodiments of the present application, an outer surface of the base portion is flush with an outer surface of the transitional portion, and an inner surface of the transitional portion is disposed at an angle relative to an inner surface of the base portion.

In the above solution, since the outer surface of the base body portion is flush with the outer surface of the transitional portion, an increase of the outer volume of the cylindrical cell is avoided, and energy density of the cylindrical cell can be increased. The inner surface of the transitional portion is disposed at an angle relative to the inner surface of the base body portion, so that the inner surface of the housing extends in a round and smooth manner, thereby reducing the possibility of the housing scratching the electrode assembly and improving safety performance of the cylindrical cell.

According to some embodiments of the present application, the second wall portion extends in a circle in a circumferential direction of the housing.

In the above solution, since the thickness of the second wall portion is greater than the thickness of the second wall portion in the circumferential direction of the housing, it is possible to make the surface of the second wall portion facing toward the end cap have a large area directly facing the end cap in the circumferential direction of the housing, so that the quality of welding between the housing and the end cap in the circumferential direction of the housing is good.

According to some embodiments of the present application, the first wall portion has a thickness of H1 and the second wall portion has a thickness of H2, where 0.01 mm ≤ H2 - H1 ≤ 1 mm.

In the above solution, the relationship between the thickness H1 of the first wall portion and the thickness H2 of the second wall portion satisfies the range mentioned above, so that the thickness of the second wall portion relative to the first wall portion can be increased, enabling a reliable welding between the second wall portion and the end cap, and further, the variation range of the thicknesses at the joint between the first wall portion and the second wall portion can be smaller, making the structural strength of the housing uniform.

According to some embodiments of the present application, the second wall portion has a length of L in the first direction, where 1 mm ≤ L ≤ 10 mm.

In the above solution, the length L of the second wall portion in the first direction satisfies the range mentioned above, so that a sufficient length is provided in the first direction, the possibility of softening deformation due to heat generated during welding between the second wall portion and the end cap is reduced, and the length ratio of the second wall portion to the first wall portion in the first direction can also be reduced, making the total weight of the housing smaller to satisfy the light weight requirement for the cylindrical cell.

According to some embodiments of the present application, the cylindrical cell further includes: an electrode assembly, accommodated in the housing, a winding axis of the electrode assembly extends in the first direction, the second wall portion has an inner diameter of D1, and the electrode assembly has an outer diameter of D2, where D1 - D2 ≥ 0.1 mm.

In the above solution, the relationship between the inner diameter D1 of the second wall portion and the outer diameter D2 of the electrode assembly satisfies the range mentioned above. This is beneficial to placing the electrode assembly into the interior of the housing from the opening and facilitates the assembling process of the cylindrical cell.

According to some embodiments of the present application, the opening is formed at each of the two opposite ends of the housing in the first direction, two of the second wall portions are provided, the two second wall portions are located on two sides of the first wall portion, respectively, two of the end caps are provided, and the two end caps are in one-to-one correspondence with the openings.

In the above solution, each of two ends of the housing in the first direction is welded to one end cap, and each of two ends of the housing in the first direction is provided with one second wall portion, thus improving the quality of welding between each end cap and the housing.

In a second aspect, an embodiment of the present application provides a battery, including a cylindrical cell according to the embodiment in the first aspect of the present application.

Due to characteristics of the cylindrical cell according to the embodiment in the first aspect of the present application, the battery according to the embodiment in the second aspect of the present application also has good safety performance.

In a third aspect, an embodiment of the present application provides a power consuming device, including a battery according to the embodiment in the second aspect of the present application, the battery being configured to provide electric energy.

Due to characteristics of the battery according to the embodiment in the second aspect of the present application, the power consuming device according to the embodiment in the third aspect of the present application also has good safety performance.

Some of the additional aspects and advantages of the present application will be set forth in the following description, and some will become apparent from the following description, or be learned by practice of the present application.

### Brief Description of the Drawings

In order to more clearly describe the technical solutions of embodiments of the present application, the accompanying drawings required in the embodiments will be described briefly below. It should be understood that the following accompanying drawings illustrate only some embodiments of the present application and therefore should not be construed as a limitation on the scope thereof. For those of ordinary skill in the art, other relevant accompanying drawings can also be obtained from these accompanying drawings without any creative effort.
FIG. 1 is a simplified schematic diagram of a vehicle according to an embodiment of the present application;
FIG. 2 is a schematic structural diagram of a battery of the vehicle in FIG. 1;
FIG. 3 is a schematic structural diagram of a cylindrical cell in a first form according to some embodiments of the present application;
FIG. 4 is an internal structure diagram of the cylindrical cell shown in FIG. 3 (an electric energy output component and a current collector are not shown);
FIG. 5 is an internal structural diagram of a cylindrical cell in a second form according to some embodiments of the present application (an electric energy output component and a current collector are not shown);
FIG. 6 is a partially enlarged view of part A in FIG. 5 (an electrode assembly is not shown);
FIG. 7 is a schematic structural diagram of a housing of the cylindrical cell shown in FIG. 5;
FIG. 8 is a partially schematic structural diagram of a housing of a cylindrical cell in a third form according to some embodiments of the present application;
FIG. 9 is a partially schematic structural diagram of a cylindrical cell in a fourth form according to some embodiments of the present application;
FIG. 10 is a schematic diagram embodying a relationship between the inner diameter of a second wall portion and the outer diameter of an electrode assembly in a cylindrical cell according to some embodiments of the present application;
FIG. 11 is a schematic diagram embodying a connection between an end cap with a poor roundness and a housing in a cylindrical cell according to some embodiments of the present application; and
FIG. 12 is a schematic diagram showing a connection between an end cap with a poor roundness and a housing in the prior art.

The foregoing drawings are not drawn to scale.
List of reference signs: 1000 - vehicle; 100 - battery; 10 - cylindrical cell; 11 - housing; 111 - side wall; 112 - opening; 1121 - first opening; 1122 - second opening; 113 - bottom wall; 114 - first wall portion; 1141 - first inner surface; 1142 - first outer surface; 115 - second wall portion; 1151 - first surface; 1152 - second inner surface; 1153 - second outer surface; 1154 - base portion; 1155 - transitional portion; 11551 - third inner surface; 11552 - third outer surface; 1156 - first gap; 116 - welding region; 12 - end cap; 121 - body portion; 122 - edge portion; 1221 - second surface; 123 - first end cap; 124 - second end cap; 13 - electrode assembly; 131 - main body; 132 - first tab; 133 - second tab; 14 - first electric energy output component; 15 - current collector; 20 - enclosure; 21 - first sub-enclosure; 22 - second sub-enclosure; 200 - controller; 300 - motor; P - first direction; R - second direction; Q - third direction.

### Detailed Description of Embodiments

In order to make the objectives, technical solutions and advantages of embodiments of the present application clearer, the technical solutions in the embodiments of the present application will be described clearly below with reference to the accompanying drawings in the embodiments of the present application. Obviously, the embodiments described are some of, rather than all of, the embodiments of the present application. All other embodiments obtained by those of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprising/including", "provided with", and any variations thereof in the description and claims, as well as the brief description of the drawings described above of the present application are intended to cover non-exclusive inclusions. The terms "first", "second", etc. in the description and the claims of the present application as well as the foregoing accompanying drawings are used to distinguish between different objects, rather than describing a specific order or a primary-secondary relationship.

In the present application, the phrase "embodiment" mentioned means that the specific features, structures, or characteristics described with reference to the embodiments can be encompassed in at least one embodiment of the present application. The phrase at various locations in the description does not necessarily refer to the same embodiment, or an independent or alternative embodiment exclusive of another embodiment. Those skilled in the art should understand, in explicit and implicit manners, that an embodiment described in the present application can be combined with another embodiment.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skill in the art, the specific meanings of the foregoing terms in the present application may be understood according to specific circumstances.

The phrase "a plurality of' appearing in the present application means two or more (including two).

In the present application, a battery cell may include a lithium ion secondary battery, a lithium ion primary battery, a lithium-sulfur battery, a sodium-lithium ion battery, a sodium ion battery or a magnesium ion battery, etc., which is not limited in the embodiments of the present application.

A battery mentioned in embodiments of the present application refers to a single physical module including one or more battery cells to provide a higher voltage and capacity. For example, the battery mentioned in the present application may include a battery module, a battery pack, etc. The battery generally includes an enclosure for packaging one or more battery cells, the enclosure being capable of preventing liquid or other foreign matters from affecting the charging or discharging of the battery cells.

The battery cell comprises an electrode assembly and an electrolyte solution. The electrode assembly is composed of a positive electrode sheet, a negative electrode sheet, and a separator. The battery cell works primarily by moving metal ions between the positive electrode sheet and the negative electrode sheet. The positive electrode sheet includes a positive electrode current collector and a positive electrode active material layer. A surface of the positive electrode current collector is coated with the positive electrode active material layer, the positive electrode current collector not coated with the positive electrode active material layer protrudes from the positive electrode current collector coated with the positive electrode active material layer, and the positive electrode current collector not coated with the positive electrode active material layer serves as a positive electrode tab. Taking a lithium ion battery as an example, the positive electrode current collector may be made of aluminum, and the positive electrode active material may be lithium cobalt oxide, lithium iron phosphate, ternary lithium, lithium manganate, etc. The negative electrode sheet comprises a negative electrode current collector and a negative electrode active material layer. A surface of the negative electrode current collector is coated with the negative electrode active material layer, the negative electrode current collector that is not coated with the negative electrode active material layer protrudes from the negative electrode current collector coated with the negative electrode active material layer, and the negative electrode current collector that is not coated with the negative electrode active material layer is used as a negative electrode tab. The negative electrode current collector may be made of copper, and the negative electrode active material may be carbon, silicon, etc. In order to ensure that no fusing occurs when a large current passes, a plurality of positive electrode tabs are provided and are stacked together, and a plurality of negative electrode tabs are provided and are stacked together. The separator may be made of polypropylene (PP), polyethylene (PE), etc.

The battery cell further comprises a current collector and an electric energy output component. The current collector is used for electrically connecting a tab of the battery cell to the electric energy output component of the same polarity so as to transmit electric energy from the electrode assembly to the electric energy output component and to the outside of the battery cell via the electric energy output component. The electric energy output component may be an electrode terminal or an end cap or a bottom wall of a housing of the battery cell. The plurality of battery cells are electrically connected to one another through a busbar component, so that the plurality of battery cells are connected in series, in parallel or in both series and parallel.

In the related art, in the assembling process of the battery cell, the housing is welded to the end cap. Due to the inevitable manufacturing tolerances of the housing and the end cap, the contour of an edge of an opening of the housing and an edge of the end cap may deviate, resulting in that the end cap cannot completely cover the opening, and leading to a poorer quality of welding between the housing and the end cap. In the process of laser moving in a circumferential direction of the housing, the laser is likely to be emitted into the interior of the housing and burn the electrode assembly inside the housing, which may damage the electrode assembly and degrade safety performance of the battery cell. Particularly for a cylindrical cell, as the roundness of the opening of the housing and the roundness of the end cap are parameters difficult to control, the probability of defective welding between the housing and the end cap of the cylindrical cell is high, resulting in low assembly qualification rate and low safety performance of the cylindrical cell.

The inventors have found upon research that during welding between the housing and the end cap, a sufficient overlap area is needed for the housing and the end cap to realize a good welding between the two. At present, in an axial direction of the cylindrical cell, there is a gap between an edge portion of the end cap and the opening of the housing, and the laser is emitted into the gap to realize the welding between the end cap and the housing. If it is possible to expand the overlap area of the housing and the end cap in the axial direction of the cylindrical cell or to optimize the roundness of the opening, the welding quality of the housing and the end cap can be improved significantly, thus improving the assembly qualification rate and safety performance of the cylindrical cell.

Based on the above ideas, the present application provides a new technical solution, in which the housing includes a first wall portion and a second wall portion disposed in the axial direction thereof, the second wall portion is located on a side of the first wall portion close to the opening, the second wall portion has a thickness greater than the thickness of the first wall portion, and the second wall portion is welded to the end cap. As the thickness of the part of the housing close to the opening is increased, on the one hand, it is possible to expand the overlap area of the second wall portion and the end cap, providing a larger error range for assembling and manufacturing, and on the other hand, it is possible to increase the strength at the opening of the housing and to improve the roundness superiority at the opening of the housing of the cylindrical cell, and accordingly, while improving the welding quality of the housing and the end cap and improving the safety performance of the cylindrical cell, the internal space for accommodating the electrode assembly of the battery will not be occupied, and there is almost no effect on the energy density of the battery.

It is to be understood that the cylindrical cells described in the embodiments of the present application may directly supply power to a power consuming device, or are connected in parallel or in series to form a battery, so as to supply power to various power consuming devices in the form of the battery.

It is to be understood that the power consuming device described in the embodiments of the present application, using the cylindrical cells, battery modules, or applicable to batteries may be in various forms, for example, a mobile phone, a portable apparatus, a laptop, an electric motorcycle, an electric vehicle, a ship, a spacecraft, an electric toy, an electric tool, etc. For example, the spacecraft includes an airplane, a rocket, a space shuttle, a spaceship, etc. The electric toy includes a fixed or mobile electric toy, such as a game console, an electric vehicle toy, an electric ship toy, an electric airplane toy, etc. The electric tool includes an electric tool for metal cutting, an electric tool for grinding, an electric tool for assembling, an electric tool for railways, etc., such as an electric drill, an electric grinder, an electric wrench, an electric screwdriver, an electric hammer, an electric impact drill, a concrete vibrator, and an electric planer.

The cylindrical cells and the batteries described in the embodiments of the present application are not only applicable to the power consuming device described above, but also applicable to all power consuming devices using cylindrical cells and batteries. However, in order to make the description concise, all the following embodiments will be described with an electric vehicle as an example.

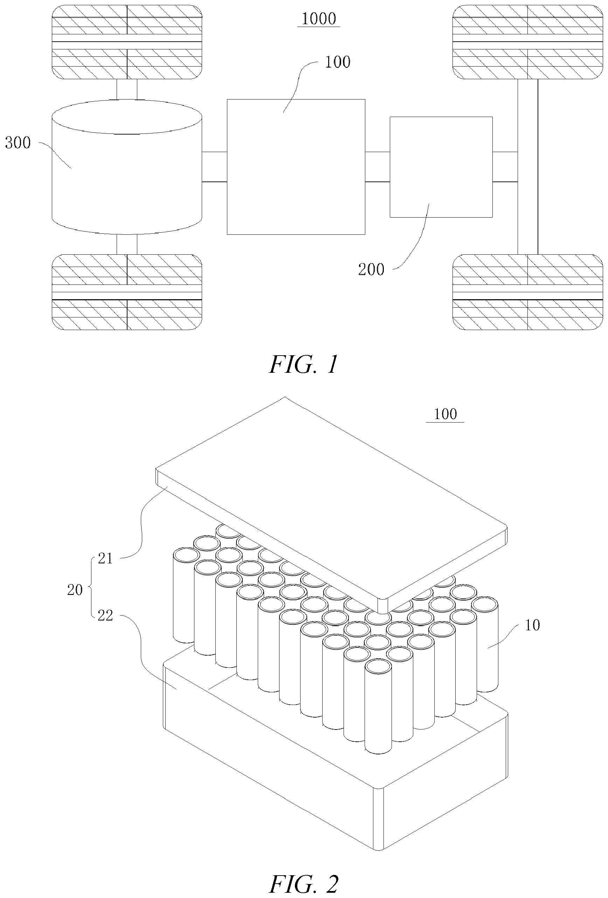

FIG. 1 is a simplified schematic diagram of a vehicle according to an embodiment of the present application; and FIG. 2 is a schematic structural diagram of a battery of the vehicle in FIG. 1.

As shown in FIG. 1, a vehicle 1000 is internally provided with a battery 100, a controller 200, and a motor 300. For example, the battery 100 may be arranged at the bottom, the front, or the rear of the vehicle 1000. The vehicle 1000 may be a fuel vehicle, a gas vehicle, or a new energy vehicle. The new energy vehicle may be a battery electric vehicle, a hybrid electric vehicle, or an extended-range vehicle, etc.

In some embodiments of the present application, the battery 100 may be configured for supplying electric energy to the vehicle 1000. For example, the battery 100 may be used as a power source for operating the vehicle 1000. The controller 200 is configured for controlling the battery 100 to supply electric energy to the motor 300, for example, for meeting the working power requirements during starting, navigating, and traveling of the vehicle 1000.

In other embodiments, the battery 100 may not only serve as the power source for operating the vehicle 1000, but may also serve as a power source for driving the vehicle 1000, replacing or partially replacing fuel or natural gas, to provide driving power for the vehicle 1000.

The battery 100 mentioned in this embodiment of the present application is a single physical module that includes one or more cylindrical cells 10 for providing a higher voltage and capacity. The plurality of cylindrical cells 10 may be connected in series, parallel, or series-parallel to directly form the battery 100, where connection in series-parallel means that the plurality of cylindrical cells 10 are connected both in series and in parallel. The plurality of cylindrical cells 10 may be connected in series, parallel, or series-parallel to form a battery module first, and then a plurality of battery modules are connected in series, parallel, or series-parallel to form the battery 100.

As shown in FIG. 2, the battery 100 includes a plurality of cylindrical cells 10 and an enclosure 20. The plurality of cylindrical cells 10 are placed inside the enclosure 20. The enclosure 20 includes a first sub-enclosure 21 and a second sub-enclosure 22. The first sub-enclosure 21 and the second sub-enclosure 22 are fitted to each other in a covered manner form a battery cavity, and a plurality of cylindrical cells 10 are placed in the battery cavity. The first sub-enclosure 21 and the second sub-enclosure 22 may be shaped depending on the shape of a combination of the plurality of cylindrical cells 10, and each of the first sub-enclosure 21 and the second sub-enclosure 22 has an opening. For example, each of the first sub-enclosure 21 and the second sub-enclosure 22 may be a hollow cuboid and has only one side with an opening, the opening of the first sub-enclosure 21 and the opening of the second sub-enclosure 22 are provided opposite each other, and the first sub-enclosure 21 and the second sub-enclosure 22 are snap-fitted to each other to form the enclosure 20 having a closed cavity. The plurality of cylindrical cells 10 are connected to each other in parallel or in series or in series-parallel before being placed in the enclosure 20 formed by snap-fitting the first sub-enclosure 21 and the second sub-enclosure 22.

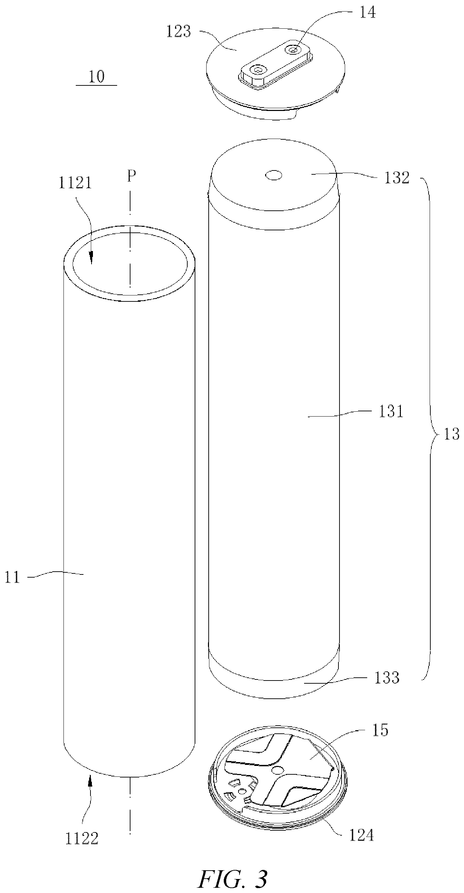

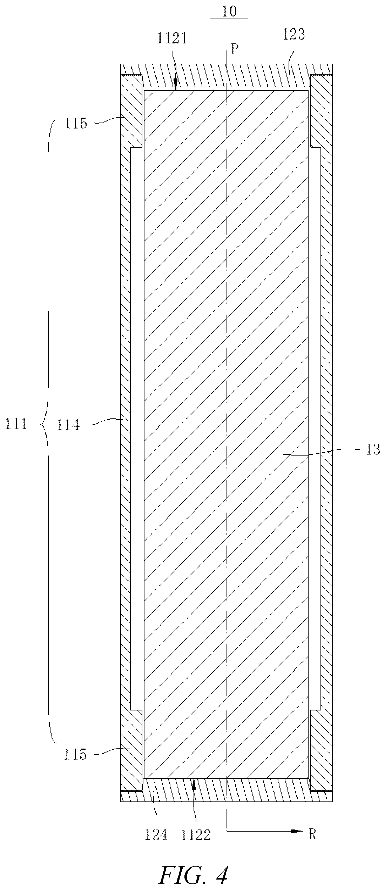

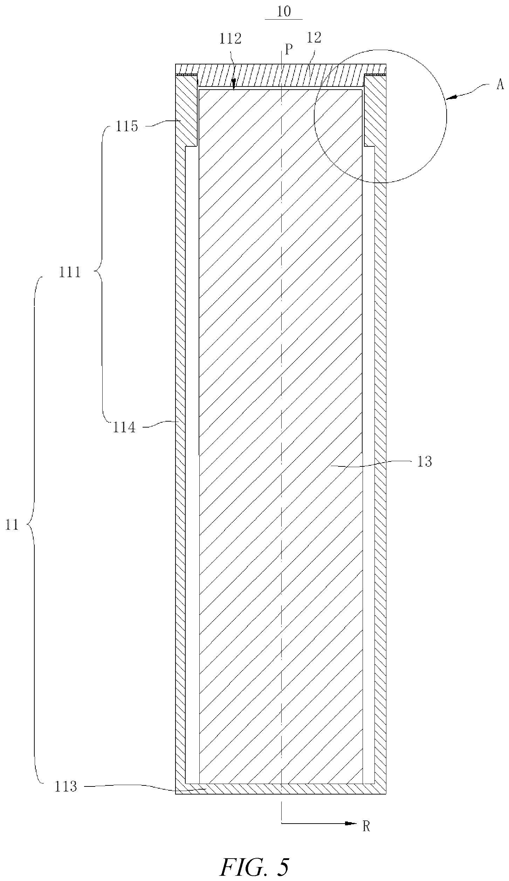

FIG. 3 is a schematic structural diagram of a cylindrical cell in a first form according to some embodiments of the present application; FIG. 4 is an internal structure diagram of the cylindrical cell shown in FIG. 3 (an electric energy output component and a current collector are not shown); and FIG. 5 is an internal structural diagram of a cylindrical cell in a second form according to some embodiments of the present application (an electric energy output component and a current collector are not shown)

As shown in FIGS. 3, 4, and 5, the cylindrical cell 10 includes a housing 11, an end cap, an electrode assembly 13, electric energy output components, and a current collector. There are two electric energy output components, including a first electric energy output component 14 and a second electric energy output component (not shown in the figures).

The housing 11 may be cylindrical or elliptical. The housing 11 may be made of a metal material, such as aluminum, an aluminum alloy, or nickel-plated steel. The end cap is of plate-like structure. The end cap matches one opening of the housing 11 in shape and size, and the end cap is fastened to the opening of the housing 11, so as to enclose the electrode assembly 13 and an electrolyte solution in an accommodating cavity of the housing 11. The end cap is made of a metal material, for example, aluminum, steel, or the like.

The housing 11 is in the form of a cylinder extending axially in a first direction P. In the first direction P, one or both ends of the housing 11 have openings. The number of the end caps corresponds to the number of the openings. The end caps cover the corresponding openings to enclose the electrode assembly 13 in the interior of the housing 11.

As shown in FIGS. 3 and 4, in some embodiments of the present application, in the first direction P, the housing 11 includes only a side wall 111, and the side wall 111 has a first opening 1121 and a second opening 1122 at two ends respectively. There are two end caps, including a first end cap 123 and a second end cap 124. The first end cap 123 covers the first opening 1121 and the second end cap 124 covers the second opening 1122.

As shown in FIG. 5, in some other embodiments of the present application, the housing 11 includes a side wall 111 and a bottom wall 113, and the side wall 111 extends in an axial direction (i.e., the first direction P) of the housing 11. In the first direction P, one end of the side wall 111 has an opening 112 and the other end is closed by a bottom wall 113. One end cap is provided, and the end cap 12 covers the opening 112. The end cap 12 matches the opening 112 in shape.

As shown in FIGS. 3 and 4, the electrode assembly 13 is disposed in the housing 11, and the electrode assembly 13 includes a main body 131, a first tab 132, and a second tab 133. The main body 131 includes a positive electrode sheet, a negative electrode sheet, and a separator, where the separator is located between the positive electrode sheet and the negative electrode sheet to separate the positive electrode sheet from the negative electrode sheet. The electrode assembly 13 is formed by winding. The electrode assembly 13 has a winding center hole running through the electrode assembly 13 in the first direction P. Of the first tab 132 and the second tab 133, the first tab 132 is a positive electrode tab and the second tab 133 is a negative electrode tab. The first tab 132 is arranged corresponding to one current collector 15, and the second tab 133 is arranged corresponding to the other current collector 15. The current collector 15 corresponding to the first tab 132 is made of aluminum, and the current collector 15 corresponding to the second tab 133 is made of copper. A thickness direction of the current collector 15 extends in the first direction P. The size and shape of the current collector 15 may match those of the electrode assembly 13 or may not match the size and shape of the electrode assembly 13.

As shown in FIG. 3, in some embodiments of the present application, in the first direction P, the first tab 132 and the second tab 133 are located on two sides of the body 131, respectively. In some other embodiments of the present application, in the first direction P, both the first tab 132 and the second tab 133 may also be disposed on the same side.

In the first direction P, a first electric energy output component 14 and a second electric energy output component (not shown in the figures) are arranged on two opposite sides of the cylindrical cell 10 respectively. The first tab 132 is electrically connected to the first electric energy output component 14 and the second tab 133 is electrically connected to the second electric energy output component. The first electric energy output component 14 and the second electric energy output component may both be electrode terminals, or one of them may be an electrode terminal. Based on the foregoing implementation in which the first end cap 123 covers the first opening 1121 and the second end cap 124 covers the second opening 1122, the first electric energy output component 14 is an electrode terminal and disposed on the first end cap 123, and the second electric energy output component is the second end cap 124. Based on the foregoing implementation in which one end cap is provided and the end cap 12 covers the opening 112, the first electric energy output component 14 is an electrode terminal and disposed on the end cap 12, and the second electric energy output component is the bottom wall 113 of the housing 11.

In some embodiments of the present application, both the first tab 132 and the second tab 133 are electrically connected to the electric energy output components of the same polarity via the corresponding current collectors 15.

In some other embodiments, the cylindrical cell 10 may also be provided without the current collector 15, with the first tab 132 being directly connected to the first electric energy output component 14 and the second tab 133 being directly connected to the second electric energy output component.

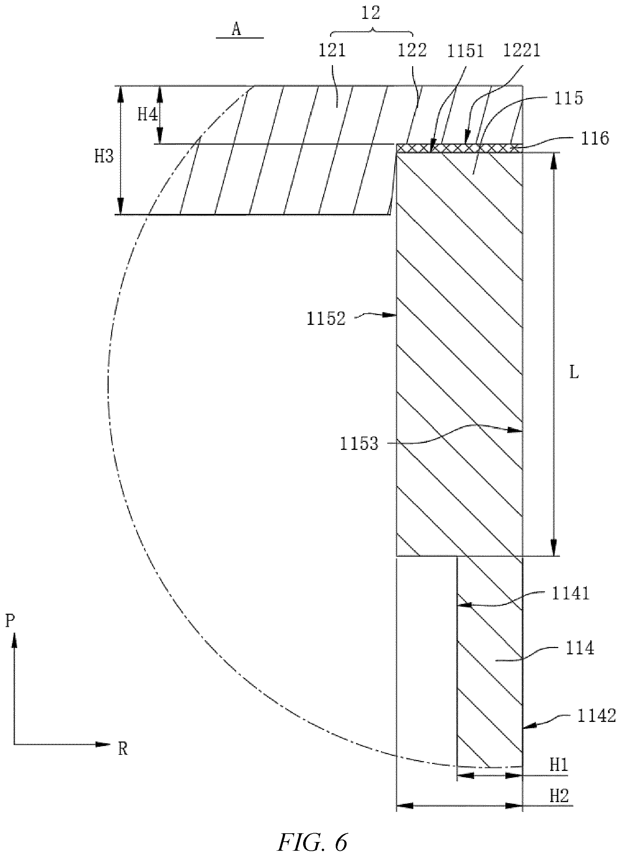

FIG. 6 is a partially enlarged view of part A in FIG. 5 (an electrode assembly is not shown).

As shown in FIGS. 4, 5 and 6, some embodiments of the present application provide a cylindrical cell 10, including a housing 11 and an end cap 12. The housing 11 has an opening at an end in the first direction P, and the end cap covers the opening. The housing 11 includes a side wall 111, the side wall 111 includes a first wall portion 114 and a second wall portion 115 disposed in the first direction P, the second wall portion 115 is located on a side of the first wall portion 114 close to the opening, the second wall portion 115 has a thickness H2 greater than the thickness H1 of the first wall portion 114, and the second wall portion 115 is welded to the end cap.

As shown in FIG. 4, openings may be formed at two opposite ends of the housing 11 in the first direction P respectively. The number of end caps and second wall portions 115 are both two, the two second wall portions 115 are located on two sides of the first wall portion 114 respectively, the two openings include the first opening 1121 and the second opening 1122, and the two end caps include the first end cap 123 and the second end cap 124, the first end cap 123 covers the first opening 1121 and is welded to the corresponding second wall portion 115, and the second end cap 124 covers the second opening 1122 and is welded to the corresponding second wall portion 115. As shown in FIG. 5, in the first direction P, the housing 11 may have an opening 112 at only one end. One end cap is provided, and the end cap 12 covers the opening 112. One second wall portion 115 is provided, the second wall portion 115 is disposed on a side of the first wall portion 114 close to the opening 112, and the end cap 12 is welded to the second wall portion 115. For ease of description, the following are all illustrated with the cylindrical cell shown in FIG. 5 as an example to specify the structure related to the second wall portion 115.

As shown in FIG. 6, the second wall portion 115 has a thickness of H2 and the first wall portion 114 has a thickness of H1, where H2 > H1. The thickness of a joint between the first wall portion 114 and the second wall portion 115 can be varied gently or directly by forming a step.

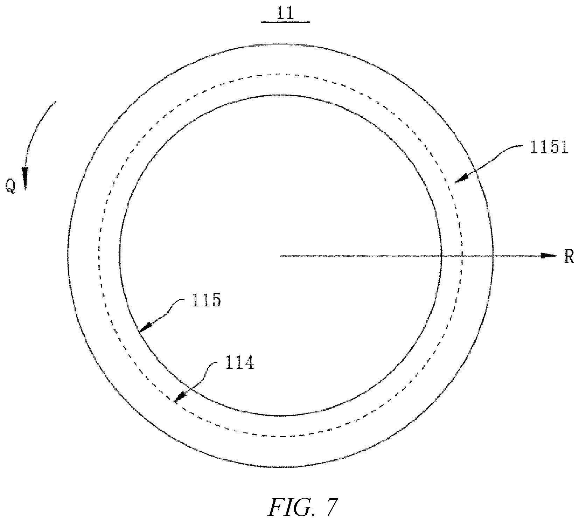

FIG. 7 is a schematic structural diagram of a housing of the cylindrical cell shown in FIG. 5.

As shown in FIGS. 5, 6, and 7, the housing 11 extends radially in a second direction R and circumferentially in a third direction Q. In the second direction R, the second wall portion 115 may achieve an increase in the thickness thereof by the ways that an inner surface of the second wall portion protrudes toward the interior of the housing 11 and/or an outer surface of the second wall portion protrudes toward the exterior of the housing 11. In the third direction Q, the second wall portion 115 may be provided in a full circle around the housing 11. The second wall portion 115 may also be provided in a half circle or a greater than half circle around the housing 11. In the third direction Q, the length L of the second wall portion 115 in the first direction P may or may not be the same.

In the cylindrical cell 10 of the embodiment of the present application, when the second wall portion 115 is welded to the end cap 12, a surface of the second wall portion 115 facing toward the end cap 12 has a large area directly facing the end cap 12 due to H2 > H1, making the housing 11 have a large welding area to the end cap 12, improving the quality of welding between the housing 11 and the end cap 12, and improving the assembly qualification rate and safety performance of the cylindrical cell 10.

As shown in FIG. 6, in some embodiments of the present application, the second wall portion 115 has a first surface 1151, the first surface 1151 is welded to the end cap 12, and the first surface 1151 is an end face of the housing 11 in the first direction P.

Specifically, a surface of the second wall portion 115 facing the end cap 12 in the first direction P is the first surface 1151, and the first surface 1151 is substantially parallel to the end cap 12. In the first direction P, a contour projection of an outer edge of the end cap 12 may fall entirely onto the first surface 1151, may fall partially onto the first surface 1151, or may not fall onto the first surface 1151.

The area of the first surface 1151 directly facing the end cap 12 refers to the area in which the projections of the first surface 1151 and the end cap 12 in the first direction P overlap with each other. By increasing the thickness of the second wall portion 115 relative to the first wall portion 114, it is possible to expand the area of the first surface 1151, thereby increasing the area of the first surface 1151 directly facing the end cap 12.

In the above solution, the area of the first surface 1151 directly facing the end cap 12 is large, so that there is a sufficient area to be welded to the end cap 12, which improves the quality of welding between the housing 11 and the end cap 12.

As shown in FIG. 6, in some embodiments of the present application, the end cap 12 includes a body portion 121 and an edge portion 122, the edge portion 122 is disposed around the body portion 121, the edge portion 122 has a thickness H4 less than the thickness H3 of the body portion 121, the edge portion 122 is welded to the first surface 1151, and in the first direction P, a projection of an outer edge of the edge portion 122 falls onto the first surface 1151.

The body portion 121 is used for mounting of the first electric energy output component 14 and arrangement of a fluid filling hole and the like, and the edge portion 122 is used to be welded to the housing 11. The edge portion 122 has a second surface 1221 facing toward the first surface 1151 in the first direction P. A gap between the first surface 1151 and the second surface 1221 in the first direction P is a welding region 116, and laser is emitted into the gap to weld the first surface 1151 to the second surface 1221 by means of a solder.

The outer edge of the edge portion 122 refers to an outer contour of the second surface 1221 in the third direction Q, hereinafter referred to as an outer edge of the second surface 1221. An inner edge of the edge portion 122 refers to an inner contour of the second surface 1221 in the third direction Q, hereinafter referred to as an inner edge of the second surface 1221.

In the first direction P, the projection of the outer edge of the edge portion 122 falling onto the first surface 1151 refers to the projection of the outer edge of the second surface 1221 falling onto the first surface 1151. That is, the outer edge of the second surface 1221 falls onto the first surface 1151, and the inner edge of the second surface 1221 may fall onto the first surface 1151 or may be located on the inner side of the inner edge of the first surface 1151.

It is to be understood that in the first direction P, the projection of the second surface 1221 may fall entirely onto the first surface 1151 or fall partially onto the first surface 1151. For example, in some embodiments of the present application, the projections of both the outer and inner edges of the second surface 1221 fall onto the first surface 1151, an outer peripheral surface of the body portion 121 is tapered, and the outer peripheral surface of the body portion 121 is snap-fit to the inner edge of the opening 112 so that the first surface 1151 has a gap with the second surface 1221 in the first direction P. In some other embodiments of the present application, the first surface 1151 and the second surface 1221 have poor flatness due to manufacturing tolerances. When the first surface 1151 abuts against the second surface 1221, the first surface 1151 may have a gap with the second surface 1221 partially, only the outer edge of the second surface 1221 falls onto the first surface 1151, and the projection of the inner edge of the second surface 1221 may also be located outside the first surface 1151.

In some embodiments of the present application, the body portion 121 protrudes in the first direction P from a surface of the housing 11 facing toward the end cap 12, the surface of the end cap 12 facing away from the housing 11 is flat, and an outer peripheral side of the body portion 121 abuts against the inner edge of the opening 112, so that the end cap 12 covers the opening 112 while there is a gap between the first surface 1151 and the second surface 1221. In other embodiments, the body portion 121 may also protrude from a surface of the end cap 12 facing away from the housing 11, or a recess is provided in the interior of a side of the body portion 121 facing toward the housing 11, thereby increasing the energy density of the cylindrical cell 10.

In the above solution, in the first direction P, the projection of the outer edge of the edge portion 122 falls onto the first surface 1151, that is, a surface of the edge portion 122 facing toward the first surface 1151 is disposed at least partially directly facing the first surface 1151, so that a reliable welding between the first surface 1151 and the edge portion 122 is realized, and the quality of welding between the housing 11 and the end cap 12 is improved.

In other embodiments, by increasing the length of the edge portion 122 in the second direction R, the area of the second surface 1221 may be expanded, and the area of the second surface 1221 directly facing the first surface 1151 may be expanded, thus improving the quality of welding between the edge portion 122 and the second wall portion 115.

In some embodiments of the present application, the second wall portion 115 protrudes from an inner surface of the first wall portion 114.

As shown in FIGS. 5 and 6, in the second direction R, the surface of the first wall portion 114 facing toward the interior of the housing 11 is a first inner surface 1141, the surface facing toward the exterior of the housing 11 is a first outer surface 1142, the surface of the second wall portion 115 facing toward the interior of the housing 11 is a second inner surface 1152, and the surface facing toward the exterior of the housing 11 is a second outer surface 1153.

The second inner surface 1152 protrudes from the first inner surface 1141, that is, the inner diameter of the second wall portion 115 is smaller than the inner diameter of the first wall portion 114. The first outer surface 1142 may be or may not be flush with the second outer surface 1153.

The second inner surface 1152 may protrude from the first inner surface 1141 at each position in the third direction Q, or may partially protrude from the first inner surface 1141.

In the above solution, the second inner surface 1152 protrudes from the first inner surface 1141, which can not only increase the thickness of the second wall portion 115, but also reduce the extent to which the second outer surface 1153 of the second wall portion 115 protrudes from the first outer surface 1142 with the same thickness, reduce the extent to which the outer volume of the cylindrical cell 10 increases due to an increase in the thickness of the second wall portion 115, thereby increasing the energy density of the cylindrical cell 10.

In some embodiments of the present application, an outer surface of the first wall portion 114 is flush with an outer surface of the second wall portion 115.

As shown in FIG. 6, specifically, the first outer surface 1142 is flush with the second outer surface 1153, that is, the outer diameter of the first wall portion 114 is the same as the outer diameter of the second wall portion 115.

In the above solution, since the first outer surface 1142 is flush with the second outer surface 1153, the thickness of the second wall portion 115 is greater than the thickness of the first wall portion 114 while the increase of the outer volume of the cylindrical cell 10 is avoided, thereby increasing the energy density of the cylindrical cell 10.

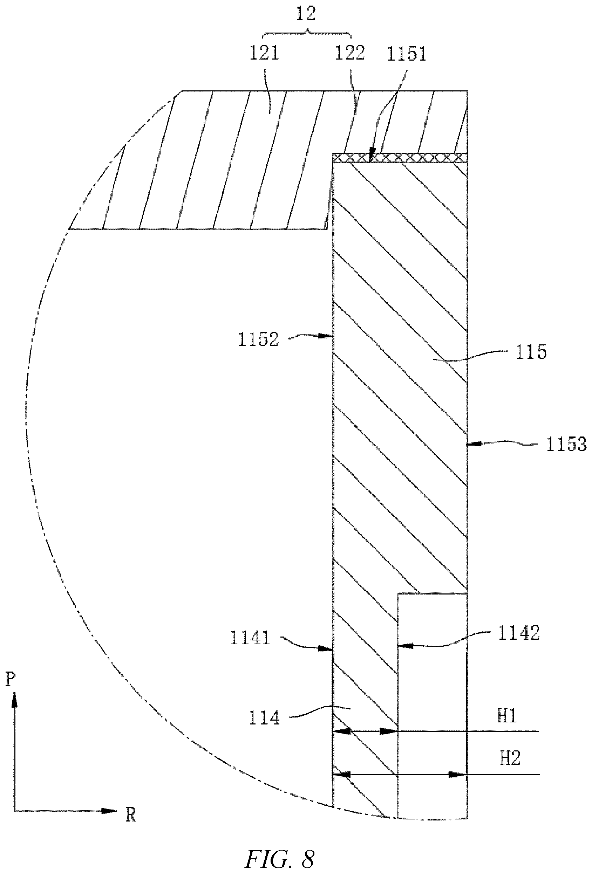

FIG. 8 is a partially schematic structural diagram of a housing of a cylindrical cell in a third form according to some embodiments of the present application.

In some embodiments of the present application, the second wall portion 115 protrudes from an outer surface of the first wall portion 114.

As shown in FIG. 8, specifically, the second outer surface 1153 protrudes from the first outer surface 1142, that is, the outer diameter of the second wall portion 115 is greater than the outer diameter of the first wall portion 114. The first inner surface 1141 may be or may not be flush with the second inner surface 1152.

In the above solution, the second outer surface 1153 protrudes from the first outer surface 1142, which can not only increase the thickness of the second wall portion 115, but also reduce the extent to which the second wall portion 115 protrudes from the inner surface of the first wall portion 114 with the same thickness, and reduce the extent to which the opening 112 of the cylindrical cell 10 is narrowed due to an increase in the thickness of the second wall portion 115, making it easy for the electrode assembly 13 to be placed into the interior of the housing 11, and facilitating the assembling process of the cylindrical cell 10.

In some embodiments of the present application, an inner surface of the first wall portion 114 is flush with an inner surface of the second wall portion 115.

As shown in FIG. 8, specifically, the first inner surface 1141 is flush with the second inner surface 1152, that is, the inner diameter of the first wall portion 114 is the same as the inner diameter of the second wall portion 115.

In the above solution, since the first inner surface 1141 is flush with the second inner surface 1152, the thickness of the second wall portion 115 is greater than the thickness of the first wall portion 114 while the original outer volume of the opening 112 of the cylindrical cell 10 is maintained, making it easy for the electrode assembly 13 to be placed into the interior of the housing 11, and facilitating the assembling process of the cylindrical cell 10.

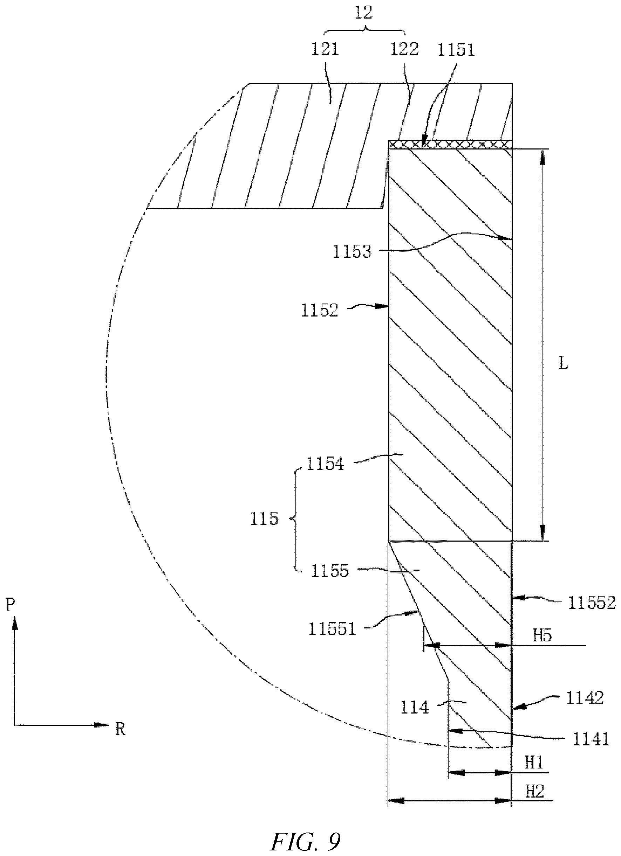

FIG. 9 is a partially schematic structural diagram of a cylindrical cell in a fourth form according to some embodiments of the present application.

As shown in FIG. 9, in some embodiments of the present application, the second wall portion 115 includes a base portion 1154 and a transition portion 1155, the transitional portion 1155 is connected between the base portion 1154 and the first wall portion 114, and the thickness of the transitional portion 1155 gradually decreases in a direction facing away from the base portion 1154.

That is, in the first direction P, the transitional portion 1155 has a first end and a second end, respectively, the first end is connected to the base portion 1154 and the second end is connected to the first wall portion 114, the first end has a thickness of H5 = H2 and the second end has a thickness of H5 = H1. In a direction of the first end pointing to the second end, H5 varies from H2 to H1.

It is to be understood that the thickness H2 of the second wall portion 115 described above refers to the thickness of the base portion 1154, and the second inner surface 1152 and the second outer surface 1153 also refer to the surface of the base portion 1154 facing toward the interior of the housing 11 and the surface of the base portion facing toward the exterior of the housing 11.

The surface of the transitional portion 1155 facing toward the interior of the housing 11 is a third inner surface 11551 and the surface facing toward the exterior of the housing 11 is a third outer surface 11552. Thickness variation of the transitional portion 1155 in the first direction P may be realized by providing the third inner surface 11551 at an angle relative to the second inner surface 1152 and/or providing the third outer surface 11552 at an angle relative to the second outer surface 1153.

In the above solution, the thickness of the transitional portion 1155 gradually decreases in a direction from the base portion 1154 toward the first wall portion 114 to realize a smooth and gradual transition of the thickness of the housing 11 from the base portion 1154 to the first wall portion 114, so that the outer surface and/or inner surface of the housing 11 is allowed to extend in a round and smooth manner and the possibility of the housing 11 scratching the electrode assembly 13 or causing harm to workers is reduced, and further, a reduction of the structural strength at a joint between the base portion 1154 and the first wall portion 114 due to a sudden reduction of the thickness can be avoided, thereby making the structural strength of the housing 11 substantially uniform and improving safety performance of the cylindrical cell 10.

As shown in FIG. 9, in some embodiments of the present application, an outer surface of the base portion 1154 is flush with an outer surface of the transitional portion 1155, and an inner surface of the transitional portion 1155 is disposed at an angle relative to an inner surface of the base portion 1154.

Specifically, the second outer surface 1153 is flush with the third outer surface 11552, and the third inner surface 11551 is disposed at an angle relative to the second inner surface 1152, that is, the outer diameter of the transitional portion 1155 is the same as the outer diameter of the base portion 1154, and the inner diameter of the transitional portion 1155 is greater than the inner diameter of the base portion 1154.

that the third inner surface 11551 is disposed at an angle relative to the second inner surface 1152 refers to that the second inner surface 1152 protrudes from the first inner surface 1141, and in the first direction P, one end of the third inner surface 11551 is connected to the second inner surface 1152, and the other end extends in a direction pointing toward the exterior of the housing 11 in the second direction R until it is connected to the first inner surface 1141, that is, in a direction from the first end 11553 pointing to the second end 11554, the inner diameter of the transitional portion 1155 gradually increases.

In the above solution, since the outer surface of the base portion 1154 is flush with the outer surface of the transitional portion 1155, an increase of the outer volume of the cylindrical cell 10 is avoided, and the energy density of the cylindrical cell 10 can be increased. The inner surface of the transitional portion 1155 is disposed at an angle relative to the inner surface of the base body portion 1154, so that the inner surface of the housing 11 extends in a round and smooth manner, thereby reducing the possibility of the housing 11 scratching the electrode assembly 13, and improving safety performance of the cylindrical cell 10.

As shown in FIGS. 5 and 7, in some embodiments of the present application, the second wall portion 115 extends in a circle in a circumferential direction (i.e., the third direction Q) of the housing 11.

That is, the second wall portion 115 is a closed loop about the axial direction (i.e., the first direction P) of the housing 11.

In the third direction Q, the thickness of the second wall portion 115 may or may not be the same.

In the above solution, since the thickness of the second wall portion 115 is greater than the thickness of the second wall portion 115 in the circumferential direction of the housing 11, it is possible to make the surface of the second wall portion 115 facing toward the end cap 12 have a large area directly facing the end cap 12 in the circumferential direction of the housing 11, so that the quality of welding between the housing 11 and the end cap 12 in the circumferential direction of the housing 11 is good.

As shown in FIG. 9, in some embodiments of the present application, the first wall portion 114 has a thickness of H1 and the second wall portion 115 has a thickness of H2, where 0.01 mm ≤ H2 - H1 ≤ 1 mm.

That is, the thickness H2 of the second wall portion 115 is 0.01-1 mm thicker than the thickness H1 of the first wall portion 114.

Based on the foregoing implementation in which the second wall portion 115 includes the base portion 1154 and the transitional portion 1155, the thickness of the base portion 1154 is used as the thickness of the second wall portion 115.

The minimum value of H2 - H1 is 0.1 mm and the maximum value is 1 mm, for example, the value of H2 - H1 may be 0.1 mm, 0.2 mm, 0.4 mm, 0.6 mm, 0.8 mm, 0.9 mm, etc. For a certain value of H2 - H1, the thickness of the second wall portion 115 and the thickness of the first wall portion 114 may have a plurality of sets of values.

For example, H1 = 0.5 mm, H2 = 0.7 mm, H2 - H1 = 0.2 mm; for another example, H1 = 0.3 mm, H2 = 0.4 mm, H2 - H1 = 0.1 mm; for a further example, H1 = 0.8 mm, H2 = 0.9 mm, H2 - H1 = 0.1 mm; for a still further example, H1 = 0.3 mm, H2 = 0.31 mm, H2 - H1 = 0.01 mm; and for another example, H1 = 0.3 mm, H2 = 1.3 mm, H2 - H1 = 1 mm, etc.

In the above solution, the relationship between the thickness H1 of the first wall portion 114 and the thickness H2 of the second wall portion 115 satisfies the range mentioned above, so that the thickness of the second wall portion 115 relative to the first wall portion 114 can be increased, enabling a reliable welding between the second wall portion 115 and the end cap 12, and further, the variation range of the thicknesses at the joint between the first wall portion 114 and the second wall portion 115 can be smaller, making the structural strength of the housing 11 uniform.

As shown in FIG. 9, in some embodiments of the present application, in the first direction P, the second wall portion 115 has a length of L, where 1 mm ≤ L ≤ 10 mm.

Based on the foregoing implementation in which the second wall portion 115 includes the base portion 1154 and the transitional portion 1155, the length of the base portion 1154 is used as the length of the second wall portion 115.

For example, L = 1 mm, 3 mm, 5 mm, 6 mm, 7 mm, 9 mm, 10 mm, etc.

In the above solution, the length L of the second wall portion 115 in the first direction P satisfies the range mentioned above, so that a sufficient length is provided in the first direction P, the possibility of softening deformation due to heat generated during welding between the second wall portion 115 and the end cap 12 is reduced, and the length ratio of the second wall portion 115 to the first wall portion 114 in the first direction P can also be reduced, making the total weight of the housing 11 smaller to satisfy the light weight requirement for the cylindrical cell 10.

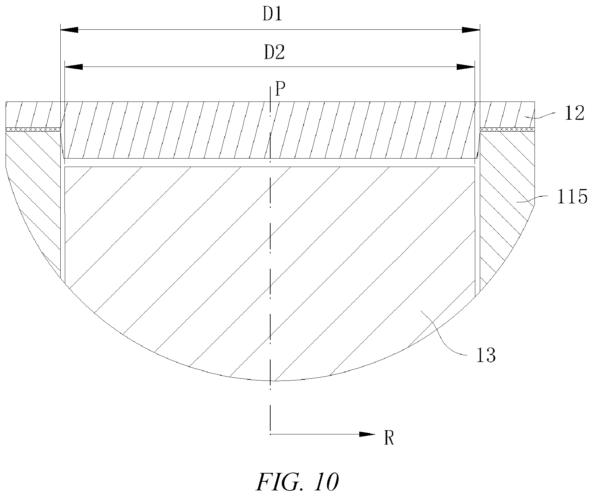

FIG. 10 is a schematic diagram embodying a relationship between the inner diameter of a second wall portion and the outer diameter of an electrode assembly in a cylindrical cell according to some embodiments of the present application.

As shown in FIGS. 5 and 10, in some embodiments of the present application, the cylindrical cell 10 further includes an electrode assembly 13 accommodated in the interior of the housing 11. A winding axis of the electrode assembly 13 extends in the first direction P, the second wall portion 115 has an inner diameter of D1 and the electrode assembly 13 has an outer diameter of D2, where D1 - D2 ≥ 0.1 mm.

Based on the foregoing implementation in which the second wall portion 115 includes the base portion 1154 and the transitional portion 1155, the inner diameter of the base portion 1154 is used as the inner diameter of the second wall portion 115 (shown in FIG. 9).

The outer diameter of the electrode assembly 13 being D2 refers to the value of the outer diameter that the electrode assembly 13 has in a deficit state, that is, the value of the outer diameter that the electrode assembly has when it is not charged and expanded.

For example, the value of D1 - D2 may be 0.1 mm, 0.3 mm, 0.5 mm, 0.7 mm, 0.9 mm, 1.2 mm, 1.5 mm, 2.5 mm, 4 mm, 6 mm, etc.

As a preferred embodiment, 0.1 mm ≤ D1 - D2 ≤ 4 mm, which is not only easy for the electrode assembly 13 to be smoothly placed into the interior of the housing 11 from the opening 112, but also enables a small gap between the electrode assembly 13 and the inner surface of the side wall 111, and reduces the shaking amplitude of the electrode assembly 13 in the second direction R, thereby compacting the internal structure of the cylindrical cell 10 and achieving a high energy density. It is to be noted that in a plane perpendicular to the first direction P, a projection of the current collector 15 should fall onto a projection of the electrode assembly 13 to ensure the safety performance of the cylindrical cell 10.

In the above solution, the relationship between the inner diameter D1 of the second wall portion 115 and the outer diameter D2 of the electrode assembly 13 satisfies the range described above. This is beneficial to placing the electrode assembly 13 into the interior of the housing 11 from the opening 112 and facilitates the assembling process of the cylindrical cell 10.

In some embodiments of the present application, the opening is formed at each of the two opposite ends of the housing 11 in the first direction P, two of the second wall portions 115 are provided, the two second wall portions 115 are located on two sides of the first wall portion 114, respectively, two of the end caps are provided, and the end caps are in one-to-one correspondence with the openings.

As shown in FIGS. 3 and 4, specifically, the two openings include a first opening 1121 and a second opening 1122, the first opening 1121 and the second opening 1122 are provided on two opposite sides of the side wall 111 in the first direction P respectively, the two end caps include a first end cap 123 and a second end cap 124, the first end cap 123 covers the first opening 1121 and is welded to the second wall portion 115 on the same side, and the second end cap 124 covers the second opening 1122 and is welded to the second wall portion 115 on the same side. It is to be understood that the connection between the first end cap 123 and the second wall portion 115 on the same side, the connection between the second end cap 124 and the second wall portion 115 on the same side, as well as the connection between the end cap 12 and the second wall portion 115 in the foregoing implementation in which one end cap is provided are in the same manner, which will not be further described herein.

In the above solution, both ends of the housing 11 in the first direction P are welded to the first end cap 123 and the second end cap 124, respectively, and the housing 11 is provided with one second wall portion 115 at each of two ends in the first direction P, so that the quality of welding between the first end cap 123 and the second end cap 124 and the housing 11 is improved.

Some embodiments of the present application provide a battery 100, including the cylindrical cell 10 of the embodiments of the present application.

Due to characteristics of the cylindrical cell 10, the battery 100 of the embodiments of the present application also has good safety performance.

Some embodiments of the present application further provide a power consuming device, including the battery 100 of the embodiments of the present application, the battery 100 being configured to provide electric energy.

Due to characteristics of the battery 100, the power consuming device in some embodiments of the present application also has good safety performance.

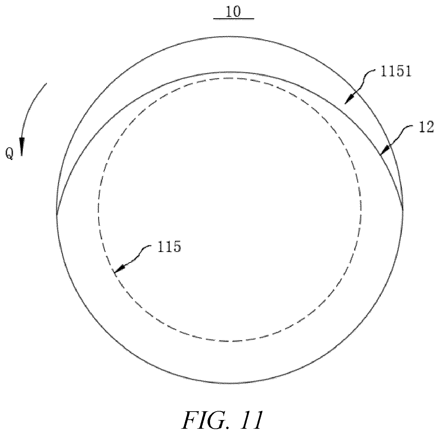

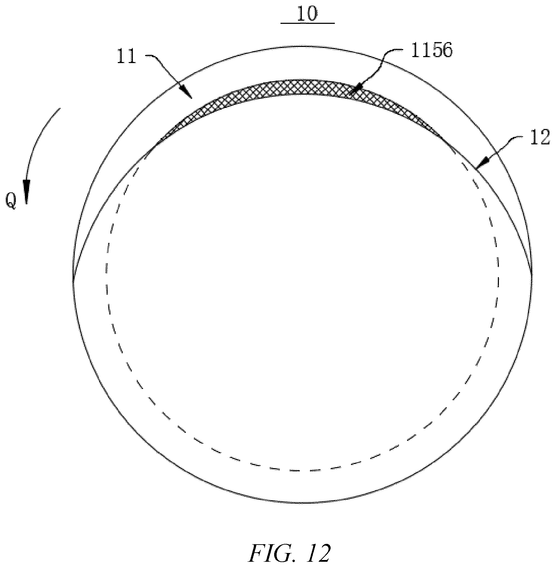

FIG. 11 is a schematic diagram embodying a connection between an end cap with a poor roundness and a housing in a cylindrical cell according to some embodiments of the present application; and FIG. 12 is a schematic diagram embodying a connection between an end with a poor roundness and a housing in the prior art.

As shown in FIGS. 1 to 12, some embodiments of the present application provide a cylindrical cell 10, including a housing 11, an end cap 12, and an electrode assembly 13. The housing 11 includes a side wall 111 and a bottom wall 113, with one side of the side wall 111 having an opening 112 in the first direction P, and the other side being closed by the bottom wall 113. Further, the side wall 111 has a first wall portion 114 and a second wall portion 115 in the first direction P. The second wall portion 115 is disposed close to the opening 112, and the second wall portion 115 is welded to the end cap 12 when the end cap 12 covers the opening 112. Specifically, the end cap 12 includes a body portion 121 and an edge portion 122 extending circumferentially around the body portion 121, the second wall portion 115 has a first surface 1151 on a side facing toward the end cap 12, the edge portion 122 has a second surface 1221 on a side facing toward the second wall portion 115, and the first surface 1151 and the second surface 1221 are disposed substantially parallel in the first direction P and have a gap between them. When the end cap 12 is welded to the housing 11, laser is emitted into the gap to weld the end cap 12 to the housing 11.

The thickness H2 of the second wall portion 115 is greater than the thickness H1 of the first wall portion 114 so that the second surface 1221 and the first surface 1151 have a large overlap area in the first direction P. In other words, in the case of poor roundness of the end cap 12 and the opening 112 of the housing 11, the first surface 1151 and the second surface 1221 have an overlap portion in the first direction P. The end cap 12 can completely cover the opening 112 without exposing the internal space of the housing 11 in the first direction P. In the process of welding the housing 11 to the end cap 12, it is possible to effectively prevent the laser from being emitted into the interior of the housing 11 to burn the electrode assembly 13.

In contrast, in the prior art, the thickness at the opening 112 of the housing 11 is still H1, and in the case of poor roundness of the end cap 12, the end cap 12 cannot completely cover the opening 112 of the housing 11, and the edge of the end cap 12 has a first gap 1156 with the opening 112, exposing the internal space of the housing 11.

As shown in FIG. 5, in some embodiments of the present application, one side of the housing 11 has an opening 112, one end cap 12 is provided, one second wall portion 115 is provided, and one second wall portion 115 is welded to the end cap 12. As shown in FIG. 4, in some other embodiments of the present application, the housing 11 has a first opening 1121 and a second opening 1122 on two sides respectively, two end caps are provided, including a first end cap 123 and a second end cap 124, two second wall portions 115 are provided correspondingly, and two second wall portions 115 are disposed on two sides of the first wall portion 114, respectively.

As shown in FIGS. 6, 8, and 9, in some embodiments of the present application, the second wall portion 115 may have a thickness greater than the thickness of the first wall portion 114 by protruding inwardly and/or protruding outwardly.

As shown in FIG. 9, in some embodiments of the present application, the second wall portion 115 includes a base portion 1154 and a transitional portion 1155 disposed in the first direction P. The base portion 1154 and the first wall portion 114 are connected by the transitional portion 1155, and the base portion 1154 is welded to the end cap 12. The transition portion 1155 achieves a smooth and gradual transition of thickness variation between the base portion 1154 and the first wall portion 114, to allow for a round and smooth transition of the inner and/or outer surfaces of the housing 11 and a uniform structural strength of the housing 11. Based on this implementation, the dimensional parameters of the second wall portion 115 refer to the dimensional parameters of the base portion 1154.

In some embodiments of the present application, 0.3 mm ≤ H1 ≤ 2 mm, 0.01 mm ≤ H2 - H1 ≤ 1 mm, 1 mm ≤ L ≤ 10 mm, and D1 - D2 ≥ 0.1 mm.

As an exemplary embodiment, the housing 11 is made of aluminum, and in the first direction P, the housing 11 has a first opening 1121 and a second opening 1122 at two ends respectively, and two second wall portions 115 are located on two sides of the first wall portion 114 respectively, where H1 = 0.3 mm, H2 = 0.4 mm, and L = 5 mm.

As another exemplary embodiment, the housing 11 is made of aluminum, and in the first direction P, the housing 11 has a first opening 1121 and a second opening 1122 at two ends respectively, and two second wall portions 115 are located on two sides of the first wall portion 114 respectively, where H1 = 0.5 mm, H2 = 0.7 mm, and L = 6 mm.

As another exemplary embodiment, the housing 11 is made of steel, and in the first direction P, the housing 11 has a first opening 1121 and a second opening 1122 at two ends respectively, and two second wall portions 115 are located on two sides of the first wall portion 114 respectively, where H1 = 0.8 mm, H2 = 0.9 mm, and L = 10 mm.

In the cylindrical cell 10 of the embodiment of the present application, since the thickness H2 of the second wall portion 115 is greater than the thickness H1 of the first wall portion 114, it is possible to effectively reduce the welding step, enhance the welding efficiency and the strength of the weld seam, ameliorate the problems such as laser leakage during welding, bias welding, weld breakage, bursting and the like due to the problem of roundness of the cylindrical cell 10, and improve safety performance of the cylindrical cell 10.

It should be noted that the features in the embodiments of the present application may be combined with one another without conflict.

The foregoing descriptions are merely preferred embodiments of the present application, but are not intended to limit the present application. For those skilled in the art, the present application may have various modifications and variations. Any modifications, equivalent substitutions, improvements, and the like made within the spirit and principle of the present application should fall within the scope of protection of the present application.

## Claims

1. A cylindrical cell, comprising:
a housing, the housing having an opening at an end in a first direction; and
an end cap, covering the opening;
wherein the housing comprises a side wall, the side wall comprises a first wall portion and a second wall portion disposed in the first direction, the second wall portion is located on a side of the first wall portion close to the opening, the second wall portion has a thickness greater than the thickness of the first wall portion, and the second wall portion is welded to the end cap.

2. The cylindrical cell according to claim 1, wherein the second wall portion has a first surface, the first surface is welded to the end cap, and the first surface is an end face of the housing in the first direction.

3. The cylindrical cell according to claim 2, wherein the end cap comprises a body portion and an edge portion, the edge portion is disposed around the body portion, the edge portion has a thickness less than the thickness of the body portion, the edge portion is welded to the first surface, and a projection of an outer edge of the edge portion falls onto the first surface in the first direction.

4. The cylindrical cell according to any one of claims 1-3, wherein the second wall portion protrudes from an inner surface of the first wall portion.

5. The cylindrical cell according to claim 4, wherein an outer surface of the first wall portion is flush with an outer surface of the second wall portion.

6. The cylindrical cell according to any one of claims 1-3, wherein the second wall portion protrudes from an outer surface of the first wall portion.

7. The cylindrical cell according to claim 6, wherein an inner surface of the first wall portion is flush with an inner surface of the second wall portion.

8. The cylindrical cell according to any one of claims 1-7, wherein the second wall portion comprises a base portion and a transitional portion, the transitional portion is connected between the base portion and the first wall portion, and the transitional portion has a thickness gradually decreases in a direction facing away from the base portion.

9. The cylindrical cell according to claim 8, wherein an outer surface of the base portion is flush with an outer surface of the transitional portion, and an inner surface of the transitional portion is disposed at an angle relative to an inner surface of the base portion.

10. The cylindrical cell according to any one of claims 1-9, wherein the second wall portion extends in a circle in a circumferential direction of the housing.

11. The cylindrical cell according to any one of claims 1-9, wherein the first wall portion has a thickness of H1 and the second wall portion has a thickness of H2, where 0.01 mm ≤ H2 - H1 ≤ 1 mm.

12. The cylindrical cell according to any one of claims 1-9, wherein the second wall portion has a length of L in the first direction, where 1 mm ≤ L ≤ 10 mm.

13. The cylindrical cell according to any one of claims 1-12, wherein the cylindrical cell further comprises:
an electrode assembly, accommodated in the housing, a winding axis of the electrode assembly extends in the first direction, the second wall portion has an inner diameter of D1, and the electrode assembly has an outer diameter of D2, where D1 - D2 ≥ 0.1 mm.

14. The cylindrical cell according to any one of claims 1-13, wherein the opening is formed at each of the two opposite ends of the housing in the first direction, two of the second wall portions are provided, the two second wall portions are located on two sides of the first wall portion, respectively, two of the end caps are provided, and the two end caps are in one-to-one correspondence with the openings.

15. A battery, comprising a cylindrical cell according to any one of claims 1-14.

16. A power consuming device, comprising a battery according to claim 15, the battery being configured to supply electric energy.
